# EUROPÄISCHE PATENTSCHRIFT

(11) **EP 1 464 566 B1**
(45) Veröffentlichungstag und Bekanntmachung des Hinweises auf die Patenterteilung: **08.03.2006**
(21) Anmeldenummer: 03024269.7
(22) Anmeldetag: 23.10.2003
(51) Int. Cl.: B62D 25/04, B62D 29/00

(54) **Verfahren zur Herstellung eines Hohlformteils mit geschlossenem Querschnitt und einer Verstärkung**
Method of manufacturing a hollow element with a closed cross-section and a reinforcement
Procédé pour la production d'un profilé creux à section transversale fermée avec renfort

(30) Priorität: 17.02.2003 DE 20302615 U
(43) Veröffentlichungstag der Anmeldung: 06.10.2004
(73) Patentinhaber: Hydroforming Chemnitz GmbH & Co. KG, 09125 Chemnitz (DE)
(72) Erfinder: Schulze, Bernd, Dr.-Ing., 09366 Niederdorf (DE)
(74) Vertreter: Rumrich, Gabriele

(56) Entgegenhaltungen:
- US-A- 5 277 469
- US-A- 6 016 603
- US-A- 6 151 940
- PATENT ABSTRACTS OF JAPAN vol. 2002, no. 11, 6. November 2002 (2002-11-06) -& JP 2002 211440 A (AISIN KEIKINZOKU CO LTD), 31. Juli 2002 (2002-07-31)
- PATENT ABSTRACTS OF JAPAN vol. 017, no. 343 (M-1436), 29. Juni 1993 (1993-06-29) -& JP 05 042823 A (SUMITOMO METAL IND LTD), 23. Februar 1993 (1993-02-23)

## Beschreibung

Die Erfindung betrifft ein Verfahren zur Herstellung eines Hohlformteils mit geschlossenem Querschnitt und einer Verstärkung.
Aus DE 19518946 A 1 ist ein Fahrzeug-Strukturbauteil bzw. ein Hohlformteil mit geschlossenem Querschnitt bekannt, das aus mindestens zwei miteinander verbundenen Bauteilen gebildet wird. Dieses Hohlformteil stellt eine vordere Säule bzw. eine A-Säule einer Fahrzeugkarosserie dar, und wird aus einer Außenplatte, einer Säulenversteifung und einer Innensäule aus Leichtmetall gebildet. Das Verstärkungselement ist dabei innerhalb des Bereichs des geschlossenen Querschnitts des Fahrzeug-Strukturbauteils angeordnet. Zur weiteren Erhöhung der Festigkeit ist es vorgesehen, mehrere Einzelelemente, wie beispielsweise Rohre, Platten oder ähnliches entlang des hohlen Verstärkungselementes anzubringen.
In DE 10126183 A1 wird eine Lösung beschrieben, wobei in dem Innenraum des Hohlformteils ein Versteifungselement angeordnet ist, welches mit dem Hohlformteil verbunden ist und sich durch eine Aussparung des Hohlformteils in dessen Innenraum erstreckt. Die Rahmenstruktur eines Fahrzeuges, wobei ein rohrartiges Rahmenteil vorgesehen ist, an dessen Außenumfang ein Blechbauteil zur Verstärkung der Rahmenstruktur vorgesehen ist, wird in DE 20206524 U1 beschrieben. Der Nachteil dieser Lösung in besteht in dem mehrteiligen Aufbau und dem dadurch verbundenen hohen Fertigungsaufwand.
Die Karosserie eines Fahrzeuges, bei welcher ein Teil der tragenden Struktur der Karosserie aus zwei zueinander offenen Strangpressprofilen zusammengesetzt ist, die nach der Verbindung miteinander einen geschlossenen Querschnitt aufweisen, wird in DE 4106501 A1 beschrieben. Die Strangpressprofile sind dabei in Form und Wanddicke entsprechend der zu erwartenden Steifigkeitsanforderungen gewichtsoptimiert. Nachteilig ist auch hier der mehrteilige Aufbau des jeweiligen Rahmenteils.
US 6,016,603 beschreibt ein Verfahren zur Herstellung eine Holformteiles, wobei ein Rohr in seinem mittleren Bereich aufgeweitet und dabei die Wanddicke verringert wird. Anschließend wird der aufgeweitete Bereich gestaucht und danach durch einen zweiten IHU-Vorgang zu einem rechteckigen Querschnitt umgeformt. Durch die verringerte Wanddicke besteht dabei die Gefahr des Berstens beim zweiten IHU-Vorgang. Eine Verstärkung wird nicht erzeugt.

Aufgabe der Erfindung ist es, ein Verfahren zur Herstellung eines Hohlformteils mit geschlossenem Querschnitt und einer Verstärkung zu entwickeln, bei dem eine minimale Anzahl von Bauteilen verwendet wird.

Diese Aufgabe wird mit den Merkmalen des ersten Patentanspruchs gelöst. Weitere vorteilhafte Ausführungen ergeben sich aus den Unteransprüchen.

Das Hohlformteil weist dabei einen geschlossenen Querschnitt und eine Verstärkung auf und ist einteilig mit der Verstärkung ausgebildet. Verfahrensgemäß wird zuerst aus einem Rohr mit einem Ausgangs-Außendurchmesser und einer Ausgangswanddicke durch ein radiales oder tangentiales Umformverfahren eine Vorform erzeugt, die mindestens einen zweiten Bereich aufweist, mit einem sich im Vergleich zum Ausgangs-Außendurchmesser verjüngenden Außendurchmesser und mit einer im Vergleich zur Ausgangswanddicke erhöhten Wanddicke, wobei die erhöhte Wanddicke die Verstärkung bildet und danach das Hohlformteil aus der Vorform durch Innenhochdruckumformen erzeugt.
Durch das radiale oder tangentiale Umformverfahren wird ein sich an den zweiten Bereich anschließender dritter zylindrischer Bereich erzeugt, welcher einen im Vergleich Ausgangs-Außendurchmesser reduzierenden Durchmesser aufweist.

Weiterhin kann das Hohlformteil in dem sich verjüngenden zweiten Bereich gebogen werden.
Der zweite konische Bereich und/oder der dritte Bereich werden dabei bevorzugt durch Hämmern, Rundkneten, Walzen, Drückwalzen oder Streckziehen in ihrem Außendurchmesser reduziert.
Es kann jeweils abwechselnd ein erster Bereich und ein zweiter Bereich oder jeweils ein erster und zweiter Bereich sowie jeweils ein weiterer, spiegelbildlich dazu angeordneter, erster und zweiter Bereich erzeugt werden.
Es kann auch jeweils ein erster, zweiter und dritter Bereich sowie jeweils ein weiterer, sich an diesen anschließender, erster, zweiter und dritter Bereich erzeugt werden, oder es kann jeweils ein erster, zweiter und dritter Bereich sowie jeweils ein weiterer, spiegelbildlich dazu angeordneter, erster, zweiter und dritter Bereich erzeugt werden.

Es ist auch möglich, dass sich an den ersten Bereich mit dem größeren Ausgangsdurchmesser rechts und links spiegelbildlich ein konischer zweiter Bereich und ein im Durchmesser reduzierter Bereich anschließen oder dass in der Mitte ein im Durchmesser reduzierter Bereich angeordnet ist, an den sich beidseitig ein konischer Bereich mit nachfolgendem vergrößertem Ausgangsdurchmesser anschließt.

Zur Herstellung z.B. einer A-Säule ist das Hohlformteil bevorzugt in dem zweiten konischen Bereich gebogen.
Durch die Wanddickenerhöhung im reduzierten Bereich ist es erstmalig möglich, ein einteiliges Rahmenteil mit Verstärkung herzustellen. Zur Fertigung beispielsweise einer A-Säule wird aus einem rohrförmigen Ausgangsteil mit einer Ausgangswanddicke durch Rundkneten eine Vorform erzeugt, die einen Bereich mit einem Ausgangsdurchmesser, einen konischen (sich im Durchmesser verjüngenden) Bereich und einen sich anschließenden zylindrischen Bereich mit reduziertem Durchmesser aufweist, wobei im konischen Bereich und im durchmesserreduzierten Bereich die Wanddicke im Vergleich zur Ausgangswanddicke erhöht ist. Die Vorform wird anschließend (vorzugsweise unter axialer Zugspannung) im konischen Bereich gebogen.
Abschließend wird durch Innenhochdruckumformen die A-Säule fertiggestellt. Dabei können vor dem Biegen und/oder vor dem IHU mehrere Zwischenumformstufen durchgeführt werden. Es ist auch möglich, vor dem IHU das teilgefertigte Werkstück zwischenzuglühen.
Durch die erhöhte Wanddicke im Konusbereich können auch bei einteiliger Ausbildung der A-Säule größere Belastungen in Crashfall aufgenommen werden.

Mit der erfindungsgemäßen Lösung ist es ebenfalls möglich, z.B. Längsträger, Rahmenteile, Achskörper und Getriebeteile zu fertigen, bei welchen in bestimmten Bereichen eine erhöhte Wanddicke bzw. Verstärkung bisher nur durch mehrteilige Bauweise erzielt werden konnte, wobei insbesondere in dem sich verjüngenden Bereich durch die vergrößerte Wanddicke erhöhten Belastungsanforderungen Rechnung getragen wird.

Die Erfindung wird nachfolgend anhand von Ausführungsbeispielen und zugehörigen Zeichnungen näher erläutert.
Es zeigen:
- Fig. 1:: rohrförmiges Ausgangsteil zur Herstellung eines Hohlformteiles in Form einer A-Säule,
- Fig. 2:: Vorform zur Herstellung eines Hohlformteiles in Form einer A-Säule,
- Fig. 3:: Vorform zur Herstellung einer Achse,
- Fig. 4:: IHU-Teil in Form einer Achse.

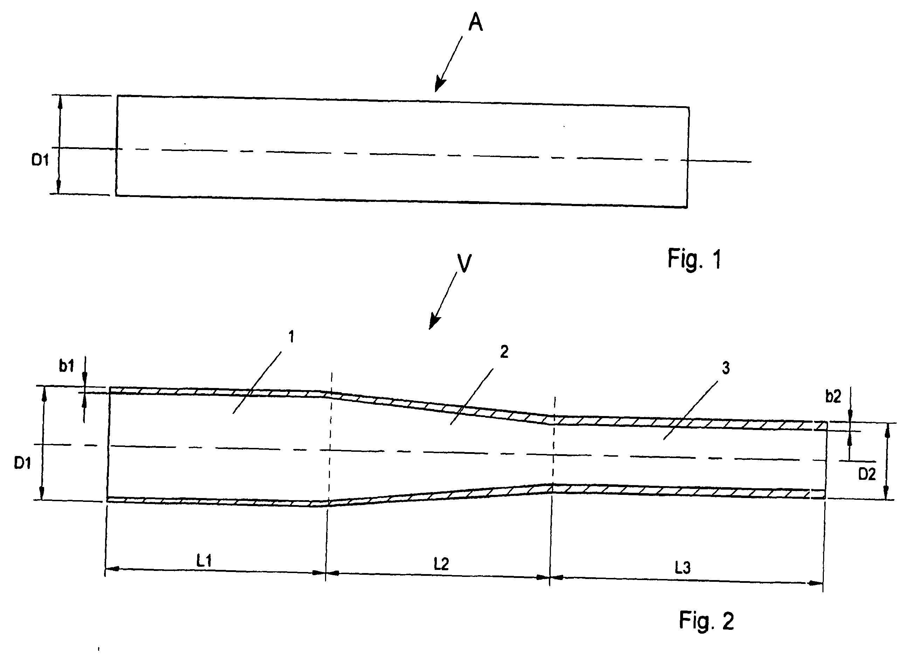

Fig. 1 zeigt ein rohrförmiges Ausgangsteil A mit einem Ausgangs-Außendurchmesser D1, welches zur Herstellung einer A-Säule dient. Gem. Fig. 2 wurde z.B. durch Rundkneten eine Vorform zur weiteren Herstellung des Hohlformteiles in Form der A-Säule, erzeugt. Diese weist einen zylindrischen ersten Bereich 1 mit einer Länge L1 auf, dessen Durchmesser dem Ausgangsdurchmesser D1 entspricht und welcher eine Ausgangswanddicke b1 besitzt. Es schließt sich ein zweiter Bereich 2 der Länge L2 an, bei welchem sich der Außendurchmesser konisch bis auf den Durchmesser D2 reduziert. Der folgende dritte Bereich 3 ist zylindrisch ausgebildet und auf einer Länge L3 auf den Durchmesser D2 reduziert. Dessen Wanddicke b2 und auch die nicht näher bezeichnete Wanddicke des zweiten Bereiches 2 sind im Vergleich zur Ausgangswanddicke b1 erhöht.
Die Vorform wird nun entsprechend der geforderten Krümmung der A-Säule gebogen, wobei der Biegeradius im zweiten Bereich liegt (nicht dargestellt). Abschließend erfolgt durch Innenhochdruckformen das endgültige Ausformen der A-Säule. Vorher können mehrere Zwischenumformstufen durchgeführt werden und ggf. eine Wärmebehandlung erfolgen. Die fertige A-Säule weist nun im Bereich der Biegung (vorher Bereich 2) und in dem sich anschließenden in Richtung zum Dach weisenden Bereich (vorher Bereich 3) eine erhöhte Wanddicke auf, die als Verstärkung wirkt und wodurch erstmalig weitere innenliegende oder außen angebrachte zusätzliche verstärkungsteile entfallen können.

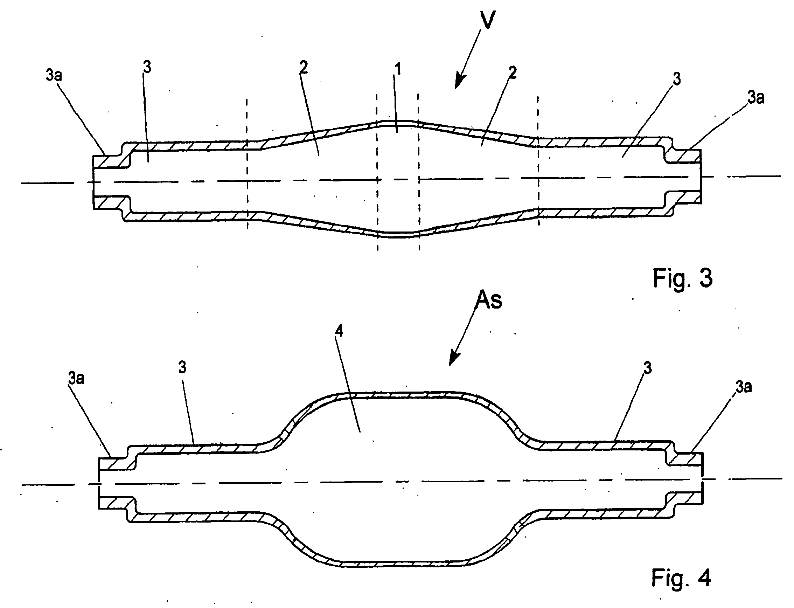

Zur Herstellung einer einteiligen Achse kann aus einem Rohr gem. Fig. 3 eine Vorform V erzeugt werden, die von der Mitte aus (nur sehr schmaler erster Bereich 1) zwei sich spiegelbildlich verjüngende Bereiche 2 und sich anschließende zylindrische durchmesserreduzierte dritte Bereiche 3 aufweist. An den beiden Enden ist ein weiterer durchmesserreduzierter Bereich 3a vorhanden. Auch hier ist die Wanddicke in den zweiten Bereichen 2 und in den dritten Bereichen 3 und 3a im Vergleich zur Ausgangswanddicke im ersten Bereich (Mitte) erhöht. Anschließend erfolgt durch Innenhochdruckumformen das Ausformen des ersten Bereiches 1 und der beiden zweiten Bereiche 2 der Achse As gem. Fig. 4. Durch die größere Wandstärke insbesondere in den Bereichen 2 der Vorform werden Risse beim IHU vermieden und genügend Material zum Nachfließen bereitgestellt. Der Übergang vom ausgeformten Bereich 4 zu den sich anschließenden Bereichen 3 hält durch die größere als Verstärkung wirkende Wanddicke höheren Belastungen stand.

## Patentansprüche

1. Verfahren zur Herstellung eines Hohlformteiles mit geschlossenem Querschnitt und einer Verstärkung, **dadurch gekennzeichnet, dass** zuerst aus einem Rohr mit einem Ausgangs-Außendurchmesser (D1) und einer Ausgangswanddicke (b1) durch ein radiales oder tangentiales Umformverfahren eine Vorform erzeugt wird, die mindestens einen zweiten Bereich (2) aufweist, mit einem sich im Vergleich zum Ausgangs-Außendurchmesser (D1) verjüngenden Außendurchmesser und mit einer im Vergleich zur Ausgangswanddicke (b1) erhöhten Wanddicke, wobei die erhöhte Wanddicke die Verstärkung bildet, und dass danach das Hohlformteil aus der Vorform durch Innenhochdruckumformen erzeugt wird.

2. Verfahren nach Anspruch 2, **dadurch gekennzeichnet, dass** durch das radiale oder tangentiale Umformverfahren ein sich an den zweiten Bereich (2) anschließender dritter zylindrischer Bereich (3) erzeugt wird, welcher einen im Vergleich zum Ausgangs-Außendurchmesser (D1) reduzierten Durchmesser (D2) aufweist.

3. Verfahren nach Anspruch 1, **dadurch gekennzeichnet, dass** das Hohlformteil in dem sich verjüngenden zweiten Bereich (2) gebogen wird.

4. Verfahren nach einem der Ansprüche 1 bis 3, **dadurch gekennzeichnet, dass** der zweite konische Bereich (2) und/oder der dritte Bereich (3) durch Hämmern, Rundkneten, Walzen, Drückwalzen oder Streckziehen in ihrem Außendurchmesser reduziert werden.

5. Verfahren nach einem der Ansprüche 1 bis 4, **dadurch gekennzeichnet, dass** jeweils abwechselnd ein erster Bereich (1) und ein zweiter Bereich (2) erzeugt werden.

6. Verfahren nach Anspruch 5, **dadurch gekennzeichnet, dass** jeweils ein erster und zweiter Bereich (1, 2) sowie jeweils ein weiterer, spiegelbildlich dazu angeordneter, erster und zweiter Bereich (1, 2) erzeugt werden.

7. Verfahren nach einem der Ansprüche 1 bis 6, **dadurch gekennzeichnet, dass** jeweils ein erster, zweiter und dritter Bereich (1, 2, 3) sowie jeweils ein weiterer, sich an diesen anschließender, erster, zweiter und dritter Bereich (1, 2, 3) erzeugt werden.

8. Verfahren nach Anspruch 7, **dadurch gekennzeichnet, dass** jeweils ein erster, zweiter und dritter Bereich (1, 2, 3) sowie jeweils ein weiterer, spiegelbildlich dazu angeordneter, erster, zweiter und dritter Bereich (1, 2, 3) erzeugt werden.

## Claims

1. A method for producing a hollow formed part with a closed cross section and a reinforcement, **characterized in that** a preform is produced at first from a tube with an initial outside diameter (D1) and an initial wall thickness (b1) by a radial or tangential forming method, which preform comprises at least a second region (2) with an outside diameter tapering in comparison with the initial outside diameter (D1) and with a wall thickness increased in comparison with the initial wall thickness (b1), with the increased wall thickness forming the reinforcement, and that thereafter the hollow formed part is produced from the preform by hydroforming.

2. A method according to claim 2, **characterized in that** as a result of the radial or tangential forming method a third cylindrical region (3) is produced which is adjacent to the second region (2) and which has a diameter (D2) which is reduced in comparison with the initial outside diameter (D1).

3. A method according to claim 1, **characterized in that** the hollow formed part is bent in the tapering second region (2).

4. A method according to one of the claims 1 to 3, **characterized in that** the second conical region (2) and/or the third region (3) are reduced in their outside diameters by hammering, rotary swaging, rolling, flow turning or stretch-forming.

5. A method according to one of the claims 1 to 4, **characterized in that** a first region (1) and a second region (2) are produced in an alternating manner.

6. A method according to claim 5, **characterized in that** a first and second region (1, 2) each and a further first and second region (1, 2) each which are arranged thereto in a mirror-inverted manner are produced.

7. A method according to one of the claims 1 to 6, **characterized in that** a first, second and third region (1, 2, 3) each and a further first, second and third region (1, 2, 3) each which are adjacent to the same are produced.

8. A method according to claim 7, **characterized in that** a first, second and third region (1, 2, 3) each and a further first, second and third region (1, 2, 3) each which are arranged thereto in a mirror-inverted manner are produced.

## Revendications

1. Procédé pour la fabrication d'une pièce moulée creuse à section fermée avec un renfort, **caractérisé en ce qu'**une ébauche est d'abord produite à partir d'un tube ayant un diamètre extérieur initial (D1) et une épaisseur de paroi initiale (b1) par formage radial ou tangentiel, laquelle ébauche possède au moins une deuxième zone (2) avec un diamètre extérieur réduit par rapport au diamètre extérieur initial (D1) et avec une épaisseur de paroi augmentée par rapport à l'épaisseur de paroi initiale (b1), l'épaisseur de paroi augmentée formant le renfort, et **en ce que** la pièce moulée creuse est ensuite produite à partir de l'ébauche par formage sous haute pression interne.

2. Procédé selon la revendication 2, **caractérisé en ce que** le procédé de formage radial ou tangentiel produit une troisième zone cylindrique (3) faisant suite à la deuxième zone (2) et qui présente un diamètre (D2) réduit par rapport au diamètre extérieur initial (D1).

3. Procédé selon la revendication 1, **caractérisé en ce que** la pièce moulée creuse est recourbée dans la deuxième zone (2) resserrée.

4. Procédé selon l'une quelconque des revendications 1 à 3, **caractérisé en ce que** le diamètre extérieur de la zone conique (2) et/ou de la troisième zone (3) est réduit par martelage, malaxage en rond, laminage, laminage sous pression ou étirage.

5. Procédé selon l'une quelconque des revendications 1 à 4, **caractérisé en ce qu'**une première zone (1) et une deuxième zone (2) sont produites alternativement.

6. Procédé selon la revendication 5, **caractérisé en ce qu'**une première zone et une deuxième (1, 2) et une autre première zone et une deuxième (1, 2) symétriques en miroir par rapport à celles-ci sont produites.

7. Procédé selon l'une quelconque des revendications 1 à 6, **caractérisé en ce qu'**une première zone, une deuxième et une troisième (1, 2, 3) et une autre première zone, une deuxième et une troisième (1, 2, 3) leur faisant suite sont produites.

8. Procédé selon la revendication 7, **caractérisé en ce qu'**une première zone, une deuxième et une troisième (1, 2, 3) et une autre première zone, une deuxième et une troisième (1, 2, 3) symétriques en miroir par rapport à celles-ci sont produites.
